Europäisches Patentamt

European Patent Office

Office européen des brevets

(11) Publication number: **0 186 286**
**B1**

(12) **EUROPEAN PATENT SPECIFICATION**

(45) Date of publication of patent specification: **02.01.91**

(21) Application number: **85307890.5**

(22) Date of filing: **31.10.85**

(51) Int. Cl.⁵: **G 01 N 27/30, G 01 N 27/28**

(54) **Apparatus for use in electrical, e.g. electrochemical, measurement procedures, and its production and use and composite assemblies incorporating the apparatus.**

(30) Priority: **31.10.84 GB 8427559**
**15.10.85 GB 8525326**

(43) Date of publication of application:
**02.07.86 Bulletin 86/27**

(45) Publication of the grant of the patent:
**02.01.91 Bulletin 91/01**

(84) Designated Contracting States:
**AT BE CH DE FR GB IT LI NL SE**

(56) References cited:
EP-A-0 024 191
EP-A-0 024 192
EP-A-0 030 503
EP-A-0 125 560
GB-A-2 021 772
US-A-4 280 889

JOURNAL OF ELECTROCHEMICAL SOCIETY,
vol. 126, no. 5, May 1979, pages 793-795,
Princeton, US; T.A. FJELDLY et al. "Solid-State
ion-selective electrodes with integrated
electronics"

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE**

(72) Inventor: **Nylander, Claes Ivan**
**8 Colworth Road**
**Sharnbrook Bedfordshire MK44 1ET (GB)**
Inventor: **Birch, Brian Jeffrey**
**14 Duchy Close**
**Chelveston Northants MK44 1SG (GB)**
Inventor: **Marshman, Clive Edward**
**37 Wood End Lane**
**Pertenhall Bedfordshire MK44 2AS (GB)**
Inventor: **Stephenson, Peter Richard**
**4 The Barn**
**Felmersham Bedfordshire MK43 7JF (GB)**

(74) Representative: **Butler, David John et al**
**Unilever PLC Patents Division P.O. Box 68**
**Unilever House**
**London EC4P 4BQ (GB)**

## Description

This invention relates to a composite electrode suitable for use in electrical, e.g. electrochemical, measurement procedures, and to its production, and composite assemblies incorporating the electrode.

It is known for various electrical (especially electrochemical measurement purposes to make and use ionophore-sensitised polyvinylchloride membranes. Known ion-selective polyvinylchloride membrane electrodes include for example constructions in which an electrode is separated from an ionophore-loaded polymer by an intermediate inner electrolyte. One such known pvc-containing ion-selective electrode system comprises a solid hollow tube containing an aqueous electrolyte solution. The end of the tube is closed by an ion-selective pvc membrane secured by a screw-down compression fitting. The inner electrolyte normally contains chloride together with (if different) a salt of an ion to which the electrode system has been made sensitive by the use of a membrane of appropriate selectivity, and the inner electrolyte has immersed in it a silver/silver chloride electrode. The silver is provided with a connection to an external circuit, usually an electrometer amplifier of high impedance, connected via a length of screened flexible cord. Normally, such an electrode is in use immersed in a (e.g. dilute) aqueous solution relevant to the measurement purpose, as part of a cell of which the other side is completed by a standard-potential reference electrode, e.g. one comprising silver/silver chloride in high concentration KCl solution, e.g. 3M KCl. The pvc of the membrane normally contains plasticiser and ionophore to enable the electrode system to be sensitive to a particular component of the analyte liquid. Also known is the use of coated-wire electrode based on ionophore-loaded polyvinylchloride coatings over conductive metal wire or graphite rod. We consider that for several purposes these coated-wire arrangments are rather unstable, e.g. in several examples their lifetime is limited by failure of the polymer layers to retain their adhesion to the solid conductor, and they are sometimes awkward to make. The electrode systems containing inner electrolyte are rather complex in construction. These systems can also often be insufficiently robust.

EP—A—30503 discloses an ion-selective composite electrode comprising a solid non-metallic substrate having bonded thereto a non-conducting matrix including a metal halide emulsion, preferably a silver halide emulsion, with a solid metallic silver surface in the form of an intermediate layer between the matrix and the substrate.

EP—A—24191 discloses a metal/metal halide reference electrode comprising an insulating support carrying a layer of metal such as silver, portions of the metal layer being coated with a composition comprising a metal salt electrolyte, a hydrophilic binder and an oxidising agent or a metal halide emulsion such as a silver halide emulsion.

The article in "Journal of Electrochemical Society" Volume 126, May 1979, pages 793—795 discloses a solid-state ion-selective electrode comprising an a-amplier and ion-selective membrane attached to a ceramic insulating substrate on which connecting lines are printed with thick-film gold paste.

Prior art in relation to the preparation of electrode materials also includes for example GB 2021772 (preparation and heat-treatment of mixtures of silver and silver particles in porous epoxy applied to metal substrate) and GB 1586691 (potted assemblies of integrated circuits and button electrodes made by loosely sintering powdered glass and silver compound, and backing the sinter with a pourable polymer compound), as well as the application of electroactive particles in matrices of polymer directly to metal electrodes, or as outer membranes in electrodes which comprise inner electrolyte.

One of the aims of this invention is to produce electrodes of robust construction without inner electrolyte, and to achieve mechanical stability, freedom from liability to develop air bubbles (in an inner electrolyte liquid) and freedom from concentration changes over time.

According to the present invention we provide a composite electrode comprising:

a solid non-conducting substrate;

metallic particles; and

a non-conducting matrix incorporating insoluble metal salt particles, the salt being of the same metal as the metallic particles and the metal salt particles being accessible to reaction with external electrochemical reagents at the surface of the electrode,

characterised in that

the metallic particles are either

i) incorporated in said non-conducting matrix, said matrix having been applied directly to said substrate as a metallic particle containing layer and the metal salt particles thereafter being formed therein by treatment of the surface of said matrix layer such that there are insoluble metal salt particles located between the metallic particles and the surface of the electrode and the surface of the electrode comprises metal salt particles; or

ii) incorporated in a further non-conducting matrix, interposed between said non-conducting matrix incorporating the metal salt particles and the substrate, the further non-conducting matrix being bonded directly to said substrate.

We find the electrodes of this form offer robustness, versatility of application and convenience in use. A number of embodiments are described below. In many of them, the electrode has an electroactive membrane which overlies said matrix incorporating said metal salt (e.g. halide) particles. In the description given below, references to ionophores means materials such as ion carriers which are capable of conferring electrochemical selectively on such electroactive membranes, without regard to other particular physicochemical properties of such ionophores, e.g. their electrical charge or neutrality.

In certain examples, the metal halide particles present are particles derived from a layer of non-conducting matrix incorporating metallic particles, the surface of which layer has been treated to convert metal to metal halide, e.g. produced by anodic electrolysis of the metal.

In several useful forms of the electrodes, the particle-containing matrix has been formed by printing a layer of corresponding material in flowable form on to the solid substrate, and hardening the layer or allowing it to harden.

Suitable substrates comprise for example epoxy, polyvinylchloride, or alumina or other ceramic material.

If desired, successively applied adjacent matrix layers can be present on the substrate, including a layer containing insoluble metal salt particles and a layer containing metallic particles interposed between said layer containing the metal salt particles and the substrate, and bonded directly to said substrate.

It is especially useful to place a hermetic sealing layer over all conductive or electroactive parts of the electrode other than the sensitive surface intended to contact electrolyte.

Also provided by the invention is an assembly comprising a composite electrode as defined herein, wherein the metallic particles of the composite electrode are functionally electronically connected to a hermetically sealed packaged semiconductor device or integrated semiconductor circuit mounted on said solid non-conducting substrate.

For example, there can be present an alumina or other ceramic substrate, or a pvc or other polymer substrate, on which there is mounted a hermetically encapsulated integrated circuit, with its connections electrically bonded to conductor(s) comprising said metallic particles incorporated in a non-conducting matrix and forming part of electrode(s) on the substrate, the structure being further encapsulated with a hermetic sealing material applied by spraying, dip-coating, moulding or otherwise in manner known *per se,* the sealing material being for example epoxy material or pvc or other polymer, to form an integral sealed assembly having a functionally exposed electrode or electrode area or areas not covered by the final encapsulation treatment.

Also provided by the invention is a process for producing these composite electrodes, which comprises (i) applying to a solid non-conducting substrate surface a flowable layer of a non-conducting matrix material incorporating metallic particles, (ii) allowing the layer to harden and bond to the substrate surface, and (iii) providing insoluble metal salt particles (e.g. halide) corresponding to the metal of the metallic particles located between said metallic particles and the surface of said electrode either by treatment of the surface of said metallic particle-containing matrix layer to form said insoluble metal salt, or by applying a further bonded non-conducting matrix layer incorporating particles of the corresponding metal salt.

Further details and embodiments of the invention are given hereinbelow.

In the performance of the present invention, the non-conducting matrix can be a body of polymer such as polyvinyl chloride, which incorporates metallic particles. The metallic particles are such as to allow the provision of a conductive connection from the particle-containing composite to an external electrical circuit. In an example to be described below, the metallic particles provide the composite electrode with a conductivity corresponding to resistivity of a few milliohm-cm. This value is by no means critical: resistivities several orders of magnitude higher can be used, but the resistance of the electrode material should generally be small in comparison with that of the external circuit (often many megohms).

Besides polyvinylchloride, other useful nonconducting solid matrices are for example polyurethane, polystyrene, polyvinylacetate, e.g. mixtures of pvc and polyvinylacetate, as well as inorganic matrices e.g. such as glass. In what follows, mention of polyvinylchloride (pvc) implies also the possible use of any such substitute matrix material. In the structures provided by the invention, the metallic particles can be for example silver, platinum, palladium-silver, thin-palladium-silver, gold, or copper. If desired, the matrix in which the particles are incorporated can be an organic matrix derived by solidification from the paint vehicle used as the base of conductive paints known and available for use in thick-film microcircuit manufacture, e.g. for the purpose of painting or screen-printing conductive tracks on flat insulating substrates such as ceramic substrates. Suitable particle sizes for the metallic particulates are for example those in the range from (of the order of) 20 to (of the order of) 200 microns. Suitable levels of incorporation of the particles into the composite can include for example those of the order of 10%—80%, e.g. 50%, by volume (based on the volume of the composition), or, dependent on the nature of the particles, whatever level is needed to reach a desired degree of electrical conductivity. One example of an electrode structure comprising silver-pvc has 3:1 silver particles; pvc particles by weight, with 50 micron (maximum particle size) silver particles.

It is particularly useful and within the scope of the invention to provide electrode structures comprising a composite layered structure of pvc comprising a layer or zone of pvc incorporating metallic and metal salt particles, as mentioned above, and a layer or zone of pvc incorporating an ionophore, to form a membrane that in use separates the conductive pvc composition from an external liquid of which an electrochemical characteristic is to be measured or tested. Preferably the same polymer is used as basis for the particle-loaded layer as for the ionophore-loaded layer. This has been found to facilitate fusion and high bond strength between the layers. We find that such arrangements are highly useful in that amongst other things they combine freedom from inner electrolyte and from liquid junctions, with good and robust stability.

For the purposes of these composite layered structures it is preferred (for the pvc of the zone that incorporates the metallic particles) to use pvc incorporating either no plasticiser or only very small quantities of plasticiser, (described herein as "pure" pvc). Preferably, of the order of 10% by weight of plasticiser or less can be present in this zone. Preferably there is less, e.g. <5%, e.g <1%).

In the case of the membrane material, examples of suitable contents for the ionophore or other sensitising component are for example within the range 5—10% by weight of the whole membrane composition. The ionophre-containing zone can be for example 0.1—1 mm thick. The pvc of the zone that incorporates the ionophore or other sensitising component should usually incorporate conventional relatively large amounts of plasticiser, as used in previous ionophore-pvc membranes, e.g. the ionophore-containing layer can for example be composed largely of a pvc:plasticiser composition in proportions for example in the range 1:1 to 1:2 by weight. Examples of plasticisers useful in connection with ion-selective polymer membranes, especially pvc membranes, include dioctyl phenyl phosphonate, diethyl adipate, dioctyl sebacate, trioctyl phosphate, and o-nitrophenyl phenyl ether. Examples of useful ionophores include calcium diisooctyl phenyl phosphate (for calcium-sensitive electrodes) valinomycin (for potassium-sensitive electrodes), tridodecylamine (for hydrogen-ion-sensitive electrodes), particles of silver chloride, bromide, or iodide (for corresponding halide-sensitive electrodes), particles of silver sulphide (for sulphide-sensitive electrodes), mixtures of particles of silver and copper sulphides (for electrodes sensitive to copper as well as to sulphide), and more generally a finely divided particulate form of any of the materials previously used in crystalline form for making single-crystal electrodes, can be incorporated into the polymer or other non-conducting matrix of the electrode membrane, in sufficient amount to put the particles in electrically effective contact to enable the electrode to respond to the presence of the corresponding constituent of the surrounding solution to be tested or measured.

It is particularly useful, in cases where the specific electrode material is based on inorganic ion-sensitive materials, to provide an electrode structure with one or a plurality of junctions between pairs of active materials, each pair having an anionic or cationic component in common, and the material in contact with the analyte solution having a common component with the analyte. For example, silver and silver halide have a common cationic component, (i.e. silver, notwithstanding that the silver of the metallic conductor is substantially not in the cationic form), and a suitable combination of materials for a fluoride-sensitive electrode is for example a multilayered, e.g. 4-layered, (e.g. laminate) construction, each layer comprising particles of the following materials in a non-conducting matrix (e.g. pvc): silver, silver chloride, silver fluoride, lanthanum fluoride.

To manufacture these structures it can be convenient and is within the scope of the invention to build up successive layers of matrix such as polyvinylchloride, loaded with various additives, e.g. as follows. If desired, there can be provided a zone of pure (i.e. tolerably plasticiser-free) pvc. As an overlying layer, there can be provided a zone of silver-particle-loaded (pure) pvc. This zone can be treated to give it a content of silver chloride accessible at its surface and in conductive contact with the useful conductive structure (e.g. as described in the Examples below). Alternatively, a further zone comprising pvc loaded with silver chloride particles, can be provided with equivalent effect. After treatment to provide silver chloride, a further zone (layer) of plasticised pvc loaded with ionophore or other sensitising component can be provided, to act as an electroactive membrane. The successive zones can be deposited either by solidification of applied (thin) layers of molten (thermoplastic) pvc with suitable additives, or by evapporation of solvent from suitably-loaded pvc solutions in a comparable solvent such as tetrahydrofuran, which can be applied by any suitable technique chosen from among those known *per se*, such as dip-coating, printing, etc.

It is within the scope of the invention to apply the electroactive membranes in any suitable way, not only by forming a membrane which has an ionophore content but also by forming a membrane without such a content and then contacting the membrane so formed with an ionophore to allow the latter to activate the membrane, (e.g. as described by E. Fogt and P. Cahalan in Anal. Chem. (1985) *57*, pp 1155—1157, and in USP 4 486 290).

In order to confer structural strength on the composite there can be a substantial core, e.g. a rod or tube or a flat substrate, of pvc or other (e.g. polymer) matrix material, e.g. pvc of normal commercial grade, which can incorporate substantial quantities of plasticiser, which has successive and preferably thin layers built up on it as follows:- (a) (optionally) pure pvc if desired, (b) silver-particle-loaded pure pvc, either treated to give it a content of silver chloride or to which a further zone comprising pvc loaded with silver chloride is applied and (c) ionophore-loaded or otherwise sensitised plasticised pvc. The layers can in certain useful examples be of the order of 0.1—1 mm thick in each case.

In one highly important configuration, for example, a planar substrate of material to which the pvc layers can be bonded or fused can have successive analogous flat layers built upon it, the successive layers for example comprising compositions as described above and forming an integral fused or bonded structure.

It is understood that when a chloriding process is required, the chloriding can be applied to silver as used in embodiments of this invention, by any method known *per se*, e.g. electrolysis with the electrode placed as anode in an electrolytic HCl bath, or other known way. Alternatively the chloride may be applied as a layer of non-conducting matrix incorporating silver chloride particles.

The use of pure (plasticiser-free) pvc or other non-conductive (e.g. polymer) matrix as an encapsulation material and/or structural support material for an electrode structure according to the invention incorporating an ionophore-loaded or otherwise ion-selectively sensitised membrane fused or bonded to the substrate is believed to be an advantageous feature of the invention in itself.

The manufacture of structures according to embodiments of this invention can be carried out by using a solvent-welding or solvent-casting technique, or other technique e.g. a thermal technique to insure that the layers involved in the composites are in intimate contact and preferably become or are formed into an integral, one-piece fused or bonded construction. Fusion or annealing processes are for example particularly suitable for vitreous or ceramic constructions, e.g. a glassy matrix containing ion-selective inclusions such as particles can be fused on to a glassy or ceramic substrate, e.g. containing conductive inclusions such as conductive particles.

The nature and variety of ion-selective membranes, known *per se*, which can be fabricated to form parts of composite structures that constitute embodiments of the present invention, is very wide, and depends on the particular end-use to which the electrode is to be put. Reference is made in this connection to all the detailed membrane compositions described (in connection with conventional wire cores) by G. J. Moody and J. D. R. Thomas in "Poly(Vinyl Chloride) Matrix Membrane Ion-Selective Electrodes", ch.4 of "Ion Selective Electrodes in Analytical Chemistry", ed. H. Freiser, Plenum Press 1980, and in U. Fiedler and J. Ruzicka, Anal. Chim. Acta, *67*, 179 (1973).

Further details of membrane fabrication are given by H. Tamura et al.; Anal. Chem. (1982), *54*, pp1224—1227, and by D. Ammann et al., in "Ion Selective Electrode Reviews", *5* (1), 1983, pp 3 et seq.

According to another aspect of this invention, an electrode structure based on a non-conducting matrix, and according to the present invention, can also comprise a hermetically sealed signal processor circuit functionally connected to the (one or plurality of) electrodes of the electrode structure, said hermetically sealed signal processor circuit comprising a hermetically sealed (packaged) integrated circuit together with ancillary conductive connections and possibly further components mounted together on the non-conducting matrix and provided with overall hermetic sealing.

The electrode or electrodes according to the invention can in themselves for example (but without limitation) take any of the forms described above in this specification or in the succeeding description and Examples.

The hermetically sealed package including the electronic circuit can be used directly as the non-conducting substrate mentioned earlier or the package can be mounted onto the substrate used for the electrode.

By using these forms of construction, composite devices for electrochemical measurements can easily be made for example by print conductors (e.g. using conductive particles in an organic matrix vehicle) on to an alumina or other ceramic substrate, or on to a pvc or other polymer substrate, mounting a hermetically encapsulated integrated circuit on the substrate and electrically bonding its connections to conductor(s), comprising said metallic particles incorporated in a non-conducting matrix and forming part of the electrode(s) on the substrate, and further encapsulating the substrate by spraying, dip-coating, moulding or otherwise applying in manner known *per se* a hermetic sealing and insulating encapsulant such as epoxy matarial or pvc or other polymer, to form an integral sealed assembly having a functionally exposed electrode or electrode area or areas not covered by the final insulating encapsulation treatment.

There are a number of different standard packages for integrated circuits. Examples of such packages which are particularly useful for this purpose are DIL (dual-in-line), SO (small outline) and LCC (leadless chip carrier).

Many integrated circuits are commercially available in DIL and SO packages. The use of these in the present invention is therefore an easy and inexpensive option. The advantage with LCC is that non-standard circuits are easily mounted into these.

It is also possible to mount an integrated circuit directly onto the substrate but this is not very practical. The reason is that this puts very severe restrictions on the insulating of the assembly. Moreover, the extreme delicacy of the very thin bonding wires (typically 25 µm) which are used for this purpose makes it difficult to encapsulate the assembly properly without damaging these wires.

By using pre-packed electronic circuits the assembly becomes mechanically robust and can therefore be encapsulated by a variety of means.

Preferably the outer material of the electrode of electrode area(s) (e.g. polymer membrane) is chosen for bonding compatibility with the hermetic sealant applied to the remaining parts of the assembly so that no ingress of water or corrosive contaminants such as ions in solution can occur to degrade the electrical connections within.

The details of the circuitry forming part of these compositie assemblies are in themselves of known kind and form *per se* no part of this invention: but by way of illustration it can be pointed out that standard semiconductor devices or integrated circuits, e.g. operational amplifier integrated circuits, especially those with f.e.t.

inputs, or simply single encapsulated f.e.t's, are very suitable for inclusion in the hybrid electrode assemblies described herein.

Examples of embodiments of the invention and their manufacture and use are illustrated in greater detail by the following description and accompanying drawings in which;

Figure 1 is a diagrammatic plan view of an electrode in accordance with the invention;

Figure 2 is a sectional view of the electrode of Figure 1;

Figures 3 to 6 and 6A are schematic sectional views of assemblies incorporating electrodes in accordance with the invention;

Figure 7A illustrates diagrammatically arrangements for screen-printing materials on substrates;

Figure 7B is a graph of voltage plotted against p[Cl⁻], i.e. negative log activity, illustrating chloride sensitivity of a silver electrode in accordance with the invention;

Figure 7C is a graph of slopes of graphs like Figure 7B plotted against time (in minutes);

Figure 7D is a graph of voltage plotted against p[Cl⁻] for electrodes anodised for short times at different current densities; and

Figure 7E is a graph of slopes of graphs like Figure 7B plotted against charge density in millicoulomb/cm².

Example 1

A chloride-sensitive electrode can be made and used as follows. A rod of pvc of ordinary commercially available grade is dipped and stirred a few minutes in tetrahydrofuran (THF) to round its sharp edges and leave a partly dissolved surface layer to fuse with the additional material to be supplied. The rod so treated is then dipped in a solution of pvc and trioctyl phosphate plasticiser containing suspended powdered silver, in THF (proportions 0.05 g pvc, 0.01 g plasticiser, and 0.3 g silver per ml mixture), and air-dried at about 50°C for about 30 minutes to evaporate the solvent.

The composite electrode so made is given an ohmic contact at one end and chlorided by anodization, for example in 0.1 M HCl solution opposite a platinum cathode at a current density of about 300 microamps per cm² of silver composite electrode surface for about half an hour. The anodized electrode, now with a surface content of silver chloride, is rinsed and stored in purified (deionised) water preferably at least 24 hours before use. The electrode can be used in a similar manner as a conventional silver/silver chloride electrode.

Example 2

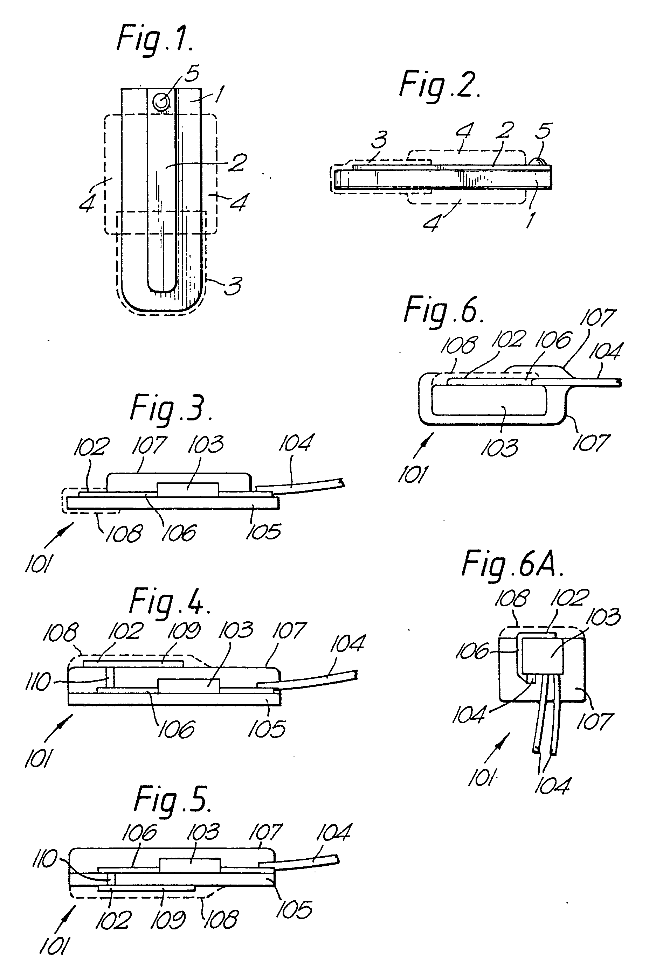

A calcium-selective planar electrode structure can be made and used as follows, and is illustrated in diagrammatic plan and section in Figures 1 and 2.

A laminar plastics substrate 1 in the form of for example a 5 mm × 30 mm strip, 0.5 mm thick, of mixed polyvinylchloride/polyvinylacetate with filler, and a relatively low content of plasticiser, has its surface partly masked off by a solvent-resisting mask to leave an area to which a conductive strip 2 is applied as follows. The area to be treated is wetted with THF, and a silver-powder-containing pvc-plasticiser-solvent mixture as in Example 1 is applied in an amount sufficient to give 0.1—0.2 thickness in the conductive strip 2 after air-drying as in Example 1. The masking is removed before the air-drying, and the dry product is anodized and stored as described in Example 1. After storage for 24 hours the composite is air-dried again, slightly wetted with THF, and an ion-selective pvc membrane 3 is applied by dipping one end of the composite into a mixture of the following components dissolved or dispersed in THF: 0.03 g/ml pvc, 0.06 g/ml dioctyl phenylphosphonate plasticiser, and 0.0067 g/ml di-(4(1,1,3,3,-tetramethylbutyl) phenyl) ionophore). After one dip in this mixture the composite is air-dried for about an hour to remove the solvent and form the membrane 3. The electrode is then masked off at each end and dipped to form a further coating 4 of slightly plasticised pvc about the middle of the strip. The coating 4 partly overlaps the membrane 3 previously formed and leaves a bare extremity of the strip at the other end, and is formed by dipping or otherwise contacting the desired part of the strip in a solution of 0.1 g/ml pvc and 0.01 g/ml trioctylphosphate in THF, followed by air-drying about 2 hours at about 30°C. Coating 4 is an effective insulator and overlaps membrane 3 by about 5 mm. An ohmic contact 5 is formed at the bare extremity of conductive strip 2 by any convenient method; the contact can be retained by a clip or by using silver-epoxy glue or by low-temperature soldering.

The resulting electrode is useful as a *robust calcium-sensitive electrode*.

Example 3

In a particularly preferred embodiment, potassium-selective electrodes can be reproducibly produced in large numbers by the following method. Cut out 20 cm × 20 cm sheets from a 1.5 mm thick sheet or PVC (e.g. Davcron, ICI) and screen-print thereon 1.5 mm wide and 13 μm thick parallel tracks, 5 mm apart, of silver particle loaded polymer paste (e.g. P230, Johnson Matthey) through a suitable silk-screen. Cure the printed paste in an oven at 50°C for 12 hours. Divide the sheets into four parts, 20 cm × 5 cm, by cutting them across the printed tracks. Chloridise the surface of the tracks by immersing the sheets in a water solution of 3% hydrogen peroxide and 0.1 molar hydrochloric acid so that about 2 cm of each track is kept above the solution. After 5 minutes a suitable amount of silver chloride will have formed on the surface of the immersed part of the tracks. Remove the sheets from the solution and rinse well in distilled water. Leave the electrodes to dry for at least one hour in a dry and clean atmosphere.

If the electrodes are to be stored before the chloridising treatment described above they should be kept in a dry atmosphere free from hydrogen sulphide to prevent uncontrolled formation of silver sulphide on the surface. This atmosphere can be obtained in a closed cabinet containing silica gel and sodium hydroxide pellets.

Cast ion selective membranes onto the chloridised part of the electrodes by immersing the sheets in the same manner as above in a solution of 28 mg/ml PVC and 55 mg/ml dioctyl phthalate and 0.8 mg/ml valinomycin in tetrahydrofuran. The sheets should be immersed in this solution for only a few seconds and slowly withdrawn from the solution. Leave the sheets to dry for about 5 minutes and repeat this procedure ten times. Thereafter, store the sheets in a dry atmosphere at 25°C for one hour to allow the solvent to evaporate.

Cut the sheets between the tracks to produce individual devices of dimensions 50 mm × 5 mm. An electric lead can be connected to the uncoated end of each electrode by means of, for example, a suitable silver loaded epoxy resin, and the uncoated end and the lead can be encapsulated by any suitable means.

The resulting electrodes can be used in the same way as conventional ion selective electrodes for the analysis of potassium ions in aqueous solutions.

The electrode fabrication methods employed in the preceding description and examples can also be applied to the construction of further embodiments within the scope of the invention, as illustrated by the accompanying schematic sectional drawings, Figures 3, 4, 5, 6 and 6A, in which like reference numerals denote like parts.

Each of Figures 3—6 and 6A shows in schematic section an assembly 101 incorporating both an electrode 102 and a hermetically sealed operational amplifier integrated circuit 103 connected as a signal processor so that it can give an output (usually amplified and at relatively low-impendance) corresponding to the signal potential developed by the electrode in use. Any desired number of wire connections 104 or other means of connections are provided at one end of each assembly, to provide for signal takeoff, power supply and any other function corresponding to the nature of the particular circuitry, which in itself forms no part of the invention.

Each assembly (other than Figure 6 and 6A) is based on a laninar polymer sheet, (here pvc), which serves as a substrate 105.

Conductive tracks 105 are bonded to the substrate 105 by screen-printing a conductive-particle-pvc mixture, drying/hardening the result, and thereafter treating to form a layer of metal salt particles, and a hermetic sealing 107 ion-selective membrane coating 108 is applied in the case of each assembly, all by the techniques already described herein.

In the device of Figure 3, the electrode 102 is formed by a part of the conductive track 106 and the overlying membrane layer 108 which is applied over an end part of the substrate 105 and conductive area not covered by hermetic sealing 107.

In the device of Figure 4, the hermetic sealing layer 107 covers the whole of substrate 105 and the components mounted on it. A further conductive layer 109 is applied by similar screen-printing technique as before to part of the upper surface of sealing layer 107, and is conductively connected to track 102 by a previously-bored hole 110 filled with a matrix loaded with conductive particles, e.g. by a similar composition as is used to make the conductive layers. Membrane layer 108 is then applied to conductive track 109.

The device of Figure 5 is similar to that of Figure 4 except that the extra layer 109, and conductor-filled boring 110 are applied to substrate 105 instead of sealant layer 107, and membrane layer 108 is formed in an appropriate position to result in an electrode mounted on the opposite side of substrate 105 to the side on which the other components are mounted.

In a useful variant of the device of Figure 5, conductive tracks 106 and 109 are joined by their extension up to and around the edge of substrate 105 instead of the connection shown as in Figure 5, and the sealant layer 107 extends to cover the area in which they so join.

In the devices of Figures 6 and 6A, which represent a convenient simplication of the construction used in the devices of Figures 3—5, the packaging 103 (e.g. epoxy packaging) of a hermetically sealed operational amplifier integrated circuit or other appropriate semiconductor circuit or device itself forms the substrate on which a membrane electrode structure is fabricated. A conductive track 106 is bonded to the surface of the packaging 103 in contact with a suitable one of the connection wires 104, and at least an electrode portion 102 of track 106 is overlain by a suitable membrane coating 108. If desired, a further overall hermetic sealing 107 can be applied, leaving a suitable number of electrical connections and active electrode areas clear to function. The order in which the hermetic packaging 107 and the membrane material 108 are applied is not critical so long as an effective seal is obtained. For the device of Figure 6A, it may be most practical to apply membrane 108 last. For these embodiments in particular it is recommended to use (in the case of an epoxy packaging 103) a silver-particle-loaded conductive paint of a kind conventional in itself, if convenient such a paint based on epoxy material, and pvc is suitable for application as the base component of a membrane material on top of such a conductive layer.

Devices similar to those of Figures 3—5 can be made on the basis of siliceous or ceramic substrates and glass membranes, among other materials.

The examples of devices described and illustrated are robust selectively ion-sensitive electrodes with good resistance to degradation by the permeation of sample liquids and components thereof, and are accessible to a flexible and convenient manufacturing process allowing the production of electrode systems with a variety of specificities.

It will be understood that many modifications and variations are applicable to the devices falling within the scope of the invention. For example, a plural number of conductive electrodes can be applied to a planar substrate as in Example 3, and by suitable masking or other method of restricting the area of application of layers, membrane layers can be applied to each conductive electrode, with the different membrane layers being either similar or different in composition, to give multiple specificity in a single electrode assembly. The upper edge of a planar electrode or assembly of electrodes can carry a plurality of ohmic contact locations, at least one for each electrode, and can be connected to an external circuit in any desired manner, e.g. by a snap-fitting connector or plug-and-socket edge connector.

It is also within the scope of this invention, to use electrode systems as described herein, which have been modified to form a layer of enzyme or other protein in contact with the polymer membrane layers or other non-conductive matrix membrane layers, especially the pvc layers, to modify the action of the membrane and the electrode in an analogous manner to the modification of previous pvc membrane electrodes described by Ismail et al., in Analyst, *109*, (1984), pp 1205—1208.

Further details of the methods used to fabricate particular examples of electrodes as described herein, and details of tests carried out on electrodes so fabricated, are shown in accompanying schematic drawings 7A—7E.

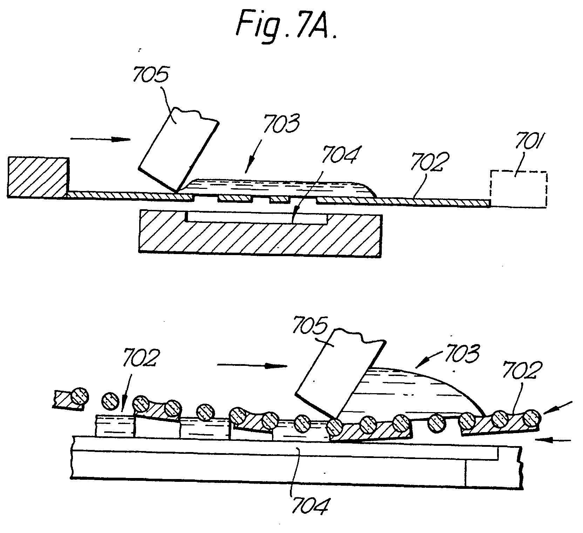

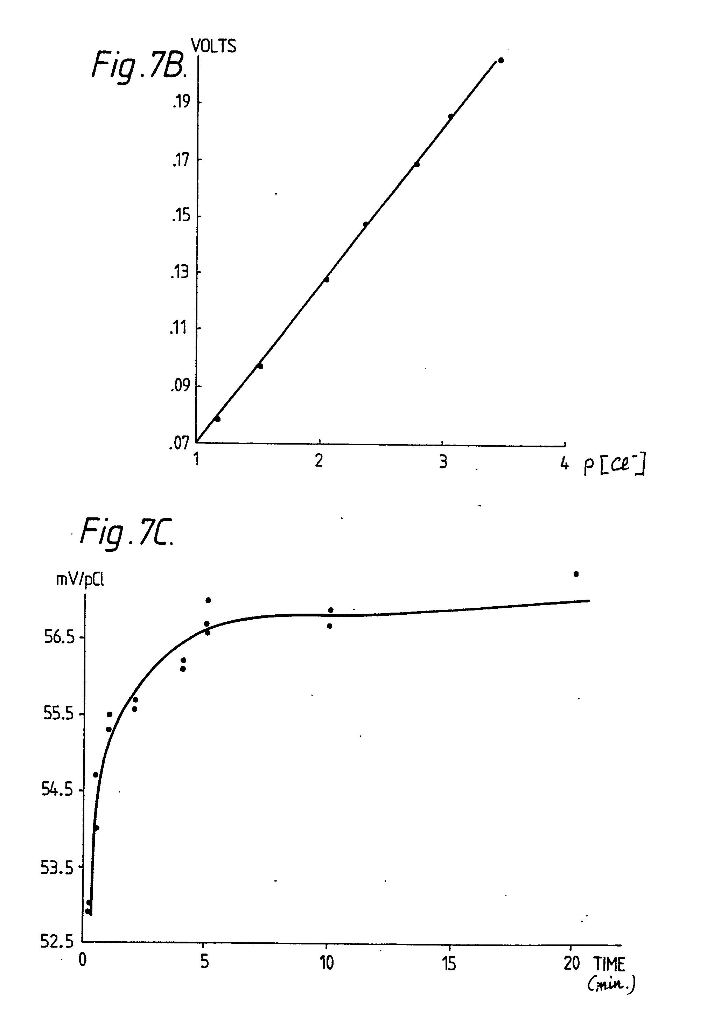

Figure 7A shows in diagrammatic form the arrangements used to screen-print the conductive flowable "inks" comprising silver particles and hardenable polymer base (e.g. as commercially obtainable for the purpose of manufacturing hybrid· electronic circuitry) on to substrates as discussed herein. In Figure 7A, a screen-printing frame 701 supports a gauze and mask 702 and is coated with ink 703 which is applied to the substrate 704 at the open areas of mask 702 by the action of a squeezee 705.

Figure 7B shows the chloride sensitivity (millivolts versus p[Cl⁻] i.e. negative log activity) of a screen-printed silver electrode made in this way and anodised in 0.1 M HCl with a Pt wire cathode for 300—1200 seconds at 0.85 mA/cm².

Figure 7C plots the slopes of graphs like Figure 7B for a range of anodisation times (minutes).

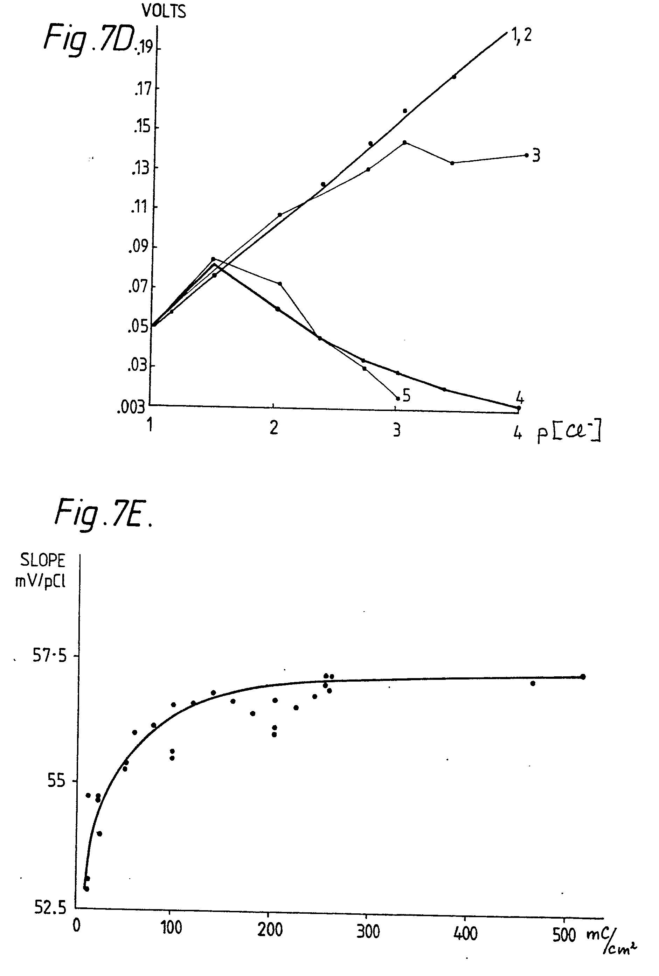

Figure 7D shows the sensitivity (millivolts versus p[Cl⁻] negative log activity) for electrodes anodised for short times (30 seconds at current densities (for plots 1 to 5) of 0.85, 0.42, 0.21, 0.095, and·0.040 mA/cm² respectively.

It has been found that if the extent of anodisation is fixed in terms of charge per unit area (252 millicoulombs/cm²) then the electrode slope is within the range 57.1—57.2 mV/p[Cl⁻] for a wide range of reciprocally varying anodisation times and current densities (1200—150 seconds, 0.21—1.68 mA/cm²).

Figure 7E summarises the electrode sensitivities obtained for a range of anodisation charge densities (slope (mV/p[Cl⁻]) versus charge density (millicoulomb/cm²)).

These graphs indicate among other things the extent to which AgCl needs to be formed to give maximal sensitivity in the resulting electrodes.

It has been found that, provided the formation of AgCl is carried out to an adequate extent for maximal sensitivity, the consistency in the slope (sensitivity) amongst screen-printed anodised Ag/AgCl electrodes is comparable with that of good conventional wire electrodes (54.7—8 mV/p[Cl⁻] in comparison with 55.0—1 mV/p[Cl⁻]).

The several features described herein, including those illustrated in and by the drawings, can be used in any desired combinations and variations to prepare an electrode according to the invention.

**Claims**

1. A composite electrode comprising:
a solid non-conducting substrate (105);
metallic particles; and
a non-conducting matrix (106) incorporating insoluble metal salt particles, the salt being of the same metal as the metallic particles and the metal salt particles being accessible to reaction with external electrochemical reagents at the surface of the electrode,
characterised to that:
the metallic particles are either
i) incorporated in said non-conducting matrix (106), said matrix having been applied directly to said substrate (105) as a metallic particle containing layer and the metal salt particles thereafter being formed therein by treatment of the surface of said metallic particle containing layer such that there are insoluble metal salt particles located between the metallic particles and the surface of the electrode and the surface of the electrode comprises metal salt particles; or
ii) incorporated in a further non-conducting matrix, interposed between said non-conducting matrix (106) incorporating the metal salt particles and the substrate (105), the further non-conducting matrix being bonded directly to said substrate (105).

2. A composite electrode according to claim 1, further comprising an electroactive membrane (108) which overlies said matrix and wherein said matrix incorporates metal salt particles.

3. A composite electrode according to claim 1 or 2, wherein the metal salt particles are metal halide particles and the metal halide particles are derived from a layer of non-conducting matrix incorporating metallic particles, the surface of which layer has been treated to convert metal to metal halide.

4. A composite electrode according to any one of claims 1 to 3, wherein the particle-containing matrix has been formed by printing a layer of corresponding material in flowable form on to the solid substrate, and hardening the layer or allowing it to harden.

5. A composite electrode according to any one of claims 1 to 4, wherein the substrate comprises plastics or ceramic material such as epoxy, polyvinylchloride, or alumina.

6. A composite electrode according to any one of claims 1 to 5, wherein the metallic and metal-salt particle respectively comprise silver and silver chloride particles.

7. A composite electrode according to claim 1, wherein successively applied adjacent matrix layers are present on the substrate, including a superficial layer containing insoluble metal salt particles and a layer containing metallic particles interposed between said layer containing the metal salt particles and the substrate, wherein said layer containing metallic particles is bonded directly to said substrate.

8. A composite electrode according to any one of claims 1 to 7, wherein a hermetic sealing layer (107) is present over all conductive or electroactive parts of the electrode other than the sensitive surface intended to contact electrolyte.

9. An assembly (101) comprising a composite electrode according to any one of claims 1 to 8, wherein the metallic particles of the composite electrode are functionally electronically connected to a hermetically sealed packaged semiconductor device or integrated semiconductor circuit (103) mounted on said solid non-conducting substrate (105).

10. An assembly (11) according to claim 9, comprising an alumina or other ceramic substrate, or a pvc or other polymer substrate (105) on which there is mounted said hermetically encapsulated semiconductor device or integrated dircuit (103) with its connections (104) electrically bonded to conductor(s) (106) comprising said metallic particles incorporated in a non-conducting matrix and forming part of electrode(s) on the substrate, and the structure being further encapsulated with a hermetic sealing material (107) applied by spraying, dip-coating, moulding or otherwise in manner known *per se*, the sealing material being for example epoxy material or pvc or other polymer, to form an integral sealed assembly having a functionally exposed electrode area or areas not covered by the final encapsulation treatment.

11. An assembly (101) according to claim 9, wherein said semiconductor device or integrated circuit is packaged in a non-metallic package (103) which constitutes said substrate for said composite electrode.

12. A process for producing a composite electrode which comprises (i) applying to a solid non-conducting substrate (105) surface a flowable layer of non-conducting matrix material incorporating metallic particles, (ii) allowing the layer to harden and bond to the substrate surface, and (iii) providing insoluble metal salt particles (e.g. halide) corresponding to the metal of the metallic particles located between said metallic particles and the surface of said electrode either by treatment of the surface of said metallic particles-containing matrix layer to form the insoluble metal salt, or by applying a further bonded non-conducting matrix layer incorporating particles of the corresponding metal salt.

## Patentansprüche

1. Verbundelektrode, umfassend:
ein festes, nicht-leitendes Substrat (105), Metallteilchen und
eine nicht-leitende, Teilchen eines unlöslichen Metallsalzes enthaltende Matrix (106), wobei das Salz vom gleichen Metall wie die Metallteilchen stammt und die Metallsalz-Teilchen einer Reaktion mit äußeren elektrochemischen Reagenzien an der Oberfläche der Elektrode zugänglich sind,
dadurch gekennzeichnet, daß
die Metallteilchen entweder
i) in der nicht-leitenden Matrix (106) enthalten sind, wobei die Matrix direkt auf das Substrat (105) als eine Metallteilchen enthal tende Schicht aufgebracht wird und die Metallsalz-Teilchen Anschließend darin durch Behandlung der Oberfläche der Metallteilchen enthal tenden Schicht gebildet werden, so daß die Teilchen des unlöslichen Metallsalzes sich zwischen den Metallteilchen und der Oberfläche der Elektrode befinden und die Elektrodenoberfläche Metallsalz-Teilchen umfaßt, oder
ii) in einer weiteren nicht-leitenden Matrix enthalten sind, die zwischen der nicht-leitenden, die Metallsalz-Teilchen enthaltenden Matrix (106) und dem Substrat (105) liegt, wobei die weitere nicht-leitende Matrix direkt an das Substrat (105) gebunden ist.

2. Verbundelektrode nach Anspruch 1, die ferner eine elektrisch aktive Membran (108), die über über der Matrix liegt, umfaßt und worin die Matrix Metallsalz-Teilchen enthält.

3. Verbundelektrode nach Anspruch 1 oder 2, worin die Metallsalz-Teilchen Metallhalogenid-Teilchen sind und die Metallhalogenid-Teilchen aus einer Schicht einer nicht-leitenden, Metallteilchen enthal tenden Matrix stammen, wobei die Oberfläche dieser Schicht behandelt wurde, um das Metall in Metallhalogenid umzuwandeln.

4. Verbundelektrode nach irgendeinem der Ansprüch 1 bis 3, worin die teilchenhaltige Matrix gebildet worden ist, indem man das feste Substrat mit einer Schicht des entsprechenden Materials in fließfähiger Form bedruckt und die Schicht härtet oder härten läßt.

5. Verbundelektrode nach irgendeinem der Ansprüche 1 bis 4, worin das Substrat Kunststoffe oder Keramikmaterial, wie Epoxyharz, Polyvinylchlorid oder Aluminiumhydroxid, umfaßt.

6. Verbundelektrode nach irgendeinem der Ansprüche 1 bis 5, worin die Metallteilchen bzw. Metallsalz-Teilchen Silber- und Silberchloridteilchen umfassen.

7. Verbundelektrode nach Anspruch 1, worin nacheinander aufgebrachte, benachbarte Matrixschichten auf dem Substrat vorliegen, einschließlich einer Oberflächenschicht, die unlösliche Metallsalz-Teilchen enthält, und einer Metallteilchen enthaltenden Schicht, die zwischen der die Metallsalz-Teilchen enthaltenden Schicht und dem Substrat liegt, worin die Metallteilchen enthaltende Schicht direkt an das Substrat

gebunden ist.

8. Verbundelektrode nach irgendeinem der Ansprüche 1 bis 7, worin eine hermetisch verschließende Schicht (107) über allen leitenden oder elektrisch aktiven Teilen der Elektrode mit Ausnahme der empfindlichen, zum Kontakt mit dem Elektrolyten beabsichtigen Oberfläche vorliegt.

9. Zusammenstellung (101), umfassend eine Verbundelektrode gemäß irgendeinem der Ansprüche 1 bis 8, worin die Metallteilchen der Verbundelektrode funktionell elektronische an eine hermetisch verschlossene, verpackte Halbleitervorrichtung oder einen integrierten Halbleiterschaltkreis (103) angeschlossen sind, die bzw. der auf dem festen, nicht-leitenden Substrat (105) montiert ist.

10. Zusammenstellung (101) nach Anspruch 9, umfassend ein Aluminiumhydroxidsubstrat oder ein anderes Keramiksubstrat oder ein PVC- oder anderes Polymersubstrat (105), auf welches die hermetisch verschlossene Halbleitervorrichtung oder der integrierte Schaltkreis (103) mit seinen elektrisch mit einem oder mehreren Leiter(n) (106) verbundenen Anschlüssen (104) montiert ist, der bzw. die in einer nicht-leitenden Matrix enthaltene Metallteilchen umfaßt und einen Teil der Elektrode(n) auf dem Substrat bildet, wobei die Struktur außerdem von einem hermetisch verschließenden Material (107) umschlossen ist, das durch Aufsprühen, Tauchbeschichten, Gießen oder in einer anderen per se bekannten Weise aufgebracht worden ist, wobei das Versiegelungsmaterial z.B. ein Epoymaterial oder PVC oder ein anderes Polymer ist, um eine integral versiegel te Zusammenstellung zu bilden, deren funktionell freiliegende Elektrodenfläche oder -flächen von der abschließenden Umschließungsbehandlung nicht bedeckt ist (sind).

11. Zusammenstellung (101) nach Anspruch 9, worin die Halbleitervorrichtung oder der integrierte Schaltkreis in eine nicht-metallische Verpackung (103) verpackt ist, die das Substrat für die Verbundelektrode darstellt.

12. Verfahren zur Herstellung einer Verbundelektrode, das umfaßt: (1) Aufbringen einer fließfähigen Schicht eines nicht-leitenden, Metallteilchen enthaltenden Matrixmaterials auf ein festes, nicht-leitendes Substrat (105), (ii) Härtenlassen der Schicht und Bindenlassen an die Substratoberfläche und (iii) Bereitstellen von Teilchen eines unlöslichen Metallsalzes (z.B. eines Halogenides) entsprechend dem Metal der Metallteilchen zwischen den Metallteilchen und der Elektrodenoberfläche, entweder durch Behandeln der Oberfläche der die Metallteilchen enthaltenden Matrixschicht zur Bildung des unlöslichen Metallsalzes oder durch Aufbringen einer weiteren gebundenen, nicht-leitenden, Teilchen des entsprechenden Metallsalzes enthaltenden Matrixschicht.

**Revendications**

1. Electrode composite comprenant:

un substrat solide non conducteur (105);
des particules métalliques; et
un réseau de base (106) non conducteur incorporant des particules insolubles de sel de métal, le sel étant du même métal que les particules métalliques et les particules de sel de métal pouvant réagir avec des réactifs électrochimiques externes à la surface de l'électrode,
caractérisé en ce que:
les particules métalliques sont soit
i) incorporées dans ledit réseau de base (106) non conducteur, ledit réseau de base ayant été appliqué directement audit substrat (105) comme une couche contenant des particules métalliques et les particules de sel de métal ci-après étant formées ici par traitement de la surface de ladite couche contenant des particules métalliques, en sorte qu'il existe des particules insolubles de sel de métal situées entre les particules métalliques et la surface de l'électrode et la surface de l'électrode comprend des particules de sel de métal; soit
ii) incorporées dans un autre réseau de base non conducteur situé entre ledit réseau de base (106) non conducteur incorporant les particules de sel de métal et le substrat (105), l'autre réseau de base non conducteur étant directement lié audit substrat (105).

2. Electrode composite selon la revendication 1, comprenant de plus une membrane active électriquement (108) qui recouvre ledit réseau de base et dans laquelle ledit réseau de base incorpore des particules de sel de métal.

3. Electrode composite selon la revendication 1 ou 2, dans laquelle les particules de sel de métal sont des particules d'halogénures en métal et les particules d'halogénures en métal sont obtenues depuis une couche du réseau de base non conducteur incorporant des particules métalliques, dont la surface de couche a été traitée pour convertir le métal en halogénure de métal.

4. Electrode composite selon l'une quelconque des revendications 1 à 3, dans laquelle le réseau de base contenant des particules a été formé en sérigraphiant une couche d'un matériau correspondant sous forme d'écoulement sur ledit substrat, et en durcissant la couche ou permettant à celle-ci de durcir.

5. Electrode composite selon l'une quelconque des revendications 1 à 4, dans laquelle le substrat comprend de la matière plastique ou de céramique telle que l'époxy, le chlorure de polyvinyle, ou l'oxyde d'aluminium.

6. Electrode composite selon l'une quelconque des revendications 1 à 5, dans laquelle les particules métalliques et de sel de métal, respectivement, comprennent des particules d'argent et de chlorure d'argent.

7. Electrode composite selon la revendication 1, dans laquelle des couches de réseau de base adjacentes appliquées successivement sont présentes sur le susbstrat, comprenant une couche superficielle contenant des particules insolubles de sel de métal et une couche contenant des particules métallique situées entre ladite couche contenant les particules de sel de métal et le substrat, dans laquelle ladite couche contenant des particules métalliques est liée directement audit substrat.

8. Electrode composite selon l'une quelconque des revendications 1 à 7, dans laquelle une couche de fermeture hermétique (107) est présente sur la totalité des parties conductrices ou actives électriquement de l'électrode autre que la surface sensible prévue pour être en contact avec l'électrolyte.

9. Assemblage (101) comprenant une électrode composite selon l'une quelconque des revendications 1 à 8, dans lequel les particules métalliques de l'électrode composite sont reliées fonctionnellement de manière électronique à une dispositif semiconducteur mis en boîtier fermé hermétiquement ou un circuit intégré semiconducteur (103) monté sur ledit substrat soluble non conducteur (105).

10. Assemblage (101) selon la revendication 9, comprenant un substrat d'oxyde d'aluminium ou autre céramique, ou un chlorure de polyvinyle ou autre substrat de polymère (105) sur lequel est monté ledit dispositif à semiconducteur encapsulé hermétiquement ou le circuit intégré (103) avec ses liaisons (104) reliées électriquement au(x) conducteur(s) (106) comprenant les dites particules métallique incorporées dans un réseau de bas non conducteur et constituant une partie de l'électrode ou des électrodes sur le substrat, et la structure étant de plus encapsulée avec un matériau d'étanchéité hermétique (107) appliquée par pulvérisation, revêtement par immersion, moulage ou de toute autre manière connue *en soi*, le matériau d'étanchéité étant par exemple un matériau époxy ou un chlorure de polyvinyle ou autre polymère, pour former une assemblage intégral étanchéifié ayant une zone ou des zones d'électrodes fonctionnellement exposées non recouvertes par le traitement d'encapsulation final.

11. Assemblage (101) selon la revendication 9, dans lequel ledit dispositif à semiconducteur ou ledit circuit intégré est mis en boîtier dans un boîtier non métallique (103) qui constitue ledit substrat pour ladite électrode composite.

12. Procédé pour produire une électrode composite qui compound les operations consistant à (i) appliquer à une surface d'un substrat soluble non conducteur (105) une couche d'écoulement d'une matériau de réseau de base non conducteur incorporant des particules métalliques, (ii) mettre la couche à durcir et à se lier à la surface du substrat et, (iii) fournir des particules insolubles de sel de métal (par exemple d'halogénures) correspondant au métal des parties métalliques situées entre les dites particules métalliques et la surface de ladite électrode, soit par traitement de la surface de ladite couche de réseau de base contenant des particules métalliques pour former le sel de métal insoluble, soit en appliquant une autre couche de réseau de base jon conductrice liée incorporant des particules du sel de métal correspondant.

Fig.1.

Fig.2.

Fig.3.

Fig.4.

Fig.5.

Fig.6.

Fig.6A.

1

# Fig.7A.

*Fig.7B.*

*Fig.7C.*

3

Fig.7D.

VOLTS

.19

.17

.15

.13

.11

.09

.07

.05

.03

.003

1,2

3

5

4

1   2   3   4   p[Cl⁻]

Fig.7E.

SLOPE
mV/pCl

57·5

55

52·5

0   100   200   300   400   500   mC/cm²